# EUROPÄISCHE PATENTSCHRIFT

(11) **EP 1 019 819 B1**
(45) Veröffentlichungstag und Bekanntmachung des Hinweises auf die Patenterteilung: **30.10.2002**
(21) Anmeldenummer: 99952269.1
(22) Anmeldetag: 02.08.1999
(51) Int. Cl.: G06F 11/00

(54) **PROGRAMMGESTEUERTE EINHEIT UND VERFAHREN ZUM DEBUGGEN DERSELBEN**
PROGRAM CONTROLLED UNIT AND METHOD FOR DEBUGGING SAME
UNITE COMMANDEE PAR PROGRAMME ET PROCEDE PERMETTANT DE DEBOGUER LADITE UNITE

(30) Priorität: 06.08.1998 DE 19835610
(43) Veröffentlichungstag der Anmeldung: 19.07.2000
(73) Patentinhaber: Infineon Technologies AG, 81669 München (DE)
(72) Erfinder: MAYER, Albrecht, D-82041 Deisenhofen (DE)
(74) Vertreter: Jannig, Peter, Dipl.-Ing.
(86) Internationale Anmeldenummer: DE9902411
(87) Internationale Veröffentlichungsnummer: WO00008559

(56) Entgegenhaltungen:
- EP-A- 0 636 976
- EP-A- 0 720 092
- "PENTIUM MEETS 1149.1 PLUS AN ASYNC RESET" ELECTRONIC ENGINEERING,GB,MORGAN-GRAMPIAN LTD. LONDON, Bd. 65, Nr. 800, 1. August 1993 (1993-08-01), Seite 15 XP000387547 ISSN: 0013-4902

## Beschreibung

Die vorliegende Erfindung betrifft eine Vorrichtung gemäß dem Oberbegriff des Patentanspruchs 1 und ein Verfahren gemäß dem Oberbegriff des Patentanspruchs 6, d.h. eine programmgesteuerte Einheit mit einem OCDS-Modul, und ein Verfahren zum Debuggen einer mit einem OCDS-Modul ausgestatteten programmgesteuerten Einheit mittels eines externen Debuggers.

Die in Rede stehenden programmgesteuerten Einheiten sind beispielsweise Mikroprozessoren, Mikrocontroller und dergleichen; sie sind seit vielen Jahren in den unterschiedlichsten Ausführungsformen bekannt und bedürfen keiner näheren Erläuterung.

Die besagten OCDS-Module sind die sogenannten On-Chip-Debug-Support-Module, die mittlerweile in fast allen neueren programmgesteuerten Einheiten integriert werden. Über derartige Einrichtungen können externe Debugger während des "normalen" Betriebes der betreffenden programmgesteuerten Einheiten in mannigfaltiger Weise auf diese zugreifen und Einfluß nehmen; dies wird derzeit vor allem dahingehend ausgenutzt, daß die betreffenden programmgesteuerten Einheiten beim Erreichen vorgebbarer Break-Bedingungen automatisch angehalten werden und/oder daß gezielte Lese- und/oder Schreibzugriffe auf die internen und externen Register, Speicher und/oder andere Komponenten der betreffenden programmgesteuerten Einheiten und/oder der diese enthaltenden Systeme durchgeführt werden.

Die besagten externen Debugger sind seit langem und in einer großen Vielzahl von Ausführungsformen bekannte Einrichtungen für die Suche nach vorhandenen Software- und/oder Hardwarefehlern in den betreffenden programmgesteuerten Einheiten oder den diese enthaltenden Systemen.

Durch die OCDS-Module werden die (relativ einfach aufgebauten) externen Debugger zu sehr mächtigen Werkzeugen, durch welche selbst sehr kompliziert aufgebaute und/oder sehr schnell arbeitende programmgesteuerte Einheiten effizient und umfassend überwacht und überprüft werden können.

Allerdings gilt dies leider nicht immer und überall. Problematisch ist es unter anderem, wenn die programmgesteuerte Einheit unmittelbar vor oder während eines Debug-Vorganges aufgrund interner und/oder externer Ereignisse und/oder Befehle zurückgesetzt wird oder werden muß. Dann können auszuführende oder gerade ausgeführte Debug-Vorgänge gestört oder unterbrochen werden, wodurch das Auffinden bestimmter Fehler verständlicherweise erschwert oder gänzlich ausgeschlossen wird.

Der vorliegenden Erfindung liegt daher die Aufgabe zugrunde, die programmgesteuerte Einheit gemäß dem Oberbegriff des Patentanspruchs 1 und das Verfahren zum Debuggen derselben gemäß dem Oberbegriff des Patentanspruchs 6 derart weiterzubilden, daß das Debuggen durch ein vor oder während des Debuggens erfolgendes Rücksetzen der programmgesteuerten Einheit nicht gestört oder unterbrochen wird.

Diese Aufgabe wird erfindungsgemäß durch das im kennzeichnenden Teil des Patentanspruchs 1 beanspruchte Merkmal (Vorrichtung) bzw. durch das im kennzeichnenden Teil des Patentanspruchs 6 beanspruchte Merkmal (Verfahren) gelöst.

Demnach ist vorgesehen,
- daß die programmgesteuerte Einheit eine Rücksetz-Managementeinrichtung aufweist, durch welche festlegbar ist, ob mit einem Rücksetzen der programmgesteuerten Einheit auch ein Rücksetzen des OCDS-Moduls erfolgen soll oder nicht (kennzeichnender Teil des Patentanspruchs 1), bzw.
- daß durch den externen Debugger bei Bedarf nach einem Rücksetzen der programmgesteuerten Einheit ein ohne Rücksetzen des OCDS-Moduls erfolgendes Rücksetzen der programmgesteuerten Einheit veranlaßt wird (kennzeichnender Teil des Patentanspruchs 6).

Führt man das gegebenenfalls erforderliche Rücksetzen der programmgesteuerten Einheit vor und während des Debuggens der programmgesteuerten Einheit so durch, daß das OCDS-Modul und gegebenenfalls auch eine zwischen dem OCDS-Modul und dem externen Debugger vorgesehene Schnittstelle dadurch nicht mit zurückgesetzt werden, so kann das Debuggen der programmgesteuerten Einheit gänzlich unbeeinflußt von deren Rücksetzen fortgeführt werden.

Darüber hinaus können dann auch die nach einem Rücksetzen der programmgesteuerten Einheit ablaufenden Vorgänge von Anfang an uneingeschränkt und lückenlos überwacht werden.

Daß das OCDS-Modul nicht immer, sondern nur in bestimmten Fällen mit der programmgesteuerten Einheit zurückgesetzt wird, läßt sich äußerst einfach bewerkstelligen. Im betrachteten Beispiel, wo durch das Rücksetzen der programmgesteuerten Einheit keine Störung oder Unterbrechung eines anstehenden oder laufenden Debug-Vorganges erfolgen soll, muß hierzu nur vorgesehen werden, daß das Rücksetzen des OCDS-Moduls unterbunden wird, wenn und so lange an die programmgesteuerte Einheit ein externer Debugger angeschlossen ist und/oder wenn und so lange ein an die programmgesteuerte Einheit angeschlossener externer Debugger signalisiert, daß kein Rücksetzen des OCDS-Moduls erfolgen soll.

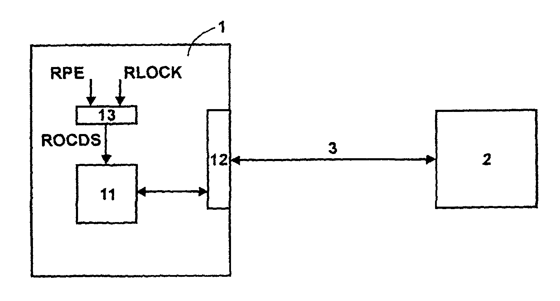

Vorteilhafte Weiterbildungen der Erfindung sind-den Unteransprüchen, der folgenden Beschreibung und der Figur entnehmbar.

Die Erfindung wird nachfolgend anhand eines Ausführungsbeispiels unter Bezugnahme auf die Zeichnung näher erläutert.

Die Figur zeigt schematisch den Aufbau der nachfolgend näher beschriebenen Anordnung zum Debuggen einer programmgesteuerten Einheit mittels eines externen Debuggers.

Die zu debuggende programmgesteuerte Einheit ist im betrachteten Beispiel ein Mikrocontroller. Es könnte sich aber ebenso um eine beliebige andere programmgesteuerte Einheit wie beispielsweise einen Mikroprozessor handeln.

Die programmgesteuerte Einheit ist in der Figur mit dem Bezugszeichen 1 bezeichnet; der die programmgesteuerte Einheit 1 debuggende externe Debugger ist mit dem Bezugszeichen 2 bezeichnet.

Die programmgesteuerte Einheit 1 enthält unter anderem ein OCDS-Modul 11, eine Debug-Schnittstelle 12, und eine Rücksetz-Managementeinrichtung 13.

Die programmgesteuerte Einheit 1 und der Debugger 2 sind über eine aus einer oder mehreren Leitungen bestehende Verbindung 3 verbunden.

Diese Verbindung 3 mündet auf der Seite der programmgesteuerten Einheit 1 in die Debug-Schnittstelle 12, welche ihrerseits mit dem OCDS-Modul 11 verbunden ist; der Debugger 2 ist so über die Verbindungsleitung 3 und die Debug-Schnittstelle 12 mit dem OCDS-Modul 11 verbunden.

Die Debug-Schnittstelle 12 ist beispielsweise das sogenannte JTAG-Interface. Das JTAG-Interface und dessen Verwendung als Debug-Schnittstelle ist bekannt und bedarf keiner näheren Erläuterung.

Das OCDS-Modul (On-Chip-Debug-Support-Modul) 11 ist eine den Debugger 2 unterstützende Einrichtung. Es ermöglicht es, daß der Debugger 2 während des "normalen" Betriebes der programmgesteuerten Einheit 1 in mannigfaltiger Weise auf diese zugreifen und Einfluß nehmen kann; insbesondere ist es dadurch möglich, daß die programmgesteuerte Einheit beim Erreichen vorgebbarer Break-Bedingungen automatisch angehalten wird und/oder daß gezielte Lese- und/oder Schreibzugriffe auf die internen und externen Register, Speicher und/oder andere Komponenten der programmgesteuerten Einheit und/oder des diese enthaltenden Systems durchgeführt werden;

Die bereits erwähnte Rücksetz-Managementeinrichtung 13 kann - wie die Bezeichnung schon andeutet - auf das Rücksetzen der programmgesteuerten Einheit 1 Einfluß nehmen.

Das Rücksetzen der programmgesteuerten Einheit 1 kann durch interne und/oder externe Ereignisse und/oder Befehle veranlaßt werden.

Die Rücksetz-Managementeinrichtung 13 überprüft bzw. legt fest, ob beim wie auch immer veranlaßten Rücksetzen der programmgesteuerten Einheit 1 sämtliche Komponenten derselben rückgesetzt werden sollen. Im betrachteten Beispiel wird überprüft bzw. festgelegt, ob mit dem Rücksetzen der programmgesteuerten Einheit auch ein Rücksetzen des OCDS-Moduls 11 erfolgen soll oder nicht. Dabei wird ein Rücksetzen des OCDS-Moduls 11 unterbunden, wenn und so lange an die programmgesteuerte Einheit 1 ein Debugger 2 angeschlossen ist und/oder wenn und so lange ein an die programmgesteuerte Einheit angeschlossener externer Debugger signalisiert, daß kein Rücksetzen des OCDS-Moduls erfolgen soll.

Ob mit dem Rücksetzen der programmgesteuerten Einheit 1 auch ein Rücksetzen des OCDS-Moduls 11 erfolgen soll, wird innerhalb der programmgesteuerten Einheit durch ein in dieser erzeugtes oder ein vom externen Debugger erhaltenes OCDS-Rücksetz-Sperrsignal RLOCK signalisiert.

Die Rücksetz-Managementeinrichtung 13 ist oder umfaßt im betrachteten Beispiel eine Logikschaltung, durch welche ein das Rücksetzen der programmgesteuerten Einheit 1 veranlassendes Signal RPE mit dem OCDS-Rücksetz-Sperrsignal RLOCK verknüpft wird. Das daraus resultierende Signal ist ein das Rücksetzen (oder Nicht-Rücksetzen) des OCDS-Moduls 11 veranlassendes OCDS-Rücksetzsignal ROCDS.

Die Rücksetz-Managementeinrichtung 13 ist im einfachsten Fall ein logisches Gatter, durch welches das das Rücksetzen der programmgesteuerten Einheit veranlassende Signal RPE und das OCDS-Rücksetz-Sperrsignal RLOCK so verknüpft werden, daß das daraus resultierende OCDS-Rücksetzsignal ROCDS nur dann ein Rücksetzen des OCDS-Moduls veranlassen kann, wenn durch das OCDS-Rücksetz-Sperrsignal RLOCK nicht signalisiert wird, daß kein Rücksetzen des OCDS-Moduls erfolgen soll.

Auf diese Weise kann zuverlässig sichergestellt werden, daß ein unmittelbar vor einem Debug-Vorgang oder ein während eines Debug-Vorganges erfolgendes Rücksetzen der programmgesteuerten Einheit keine Störung oder Unterbrechung des Debug-Vorganges bewirken kann. Genau das Gegenteil ist der Fall: durch das nicht automatische Rücksetzen des OCDS-Moduls mit dem Rücksetzen der programmgesteuerten Einheit kann der externe Debugger jetzt sogar das Verhalten der programmgesteuerten Einheit während und unmittelbar nach deren Rücksetzen verfolgen und beeinflussen; die dem externen Debugger gewidmeten Komponenten der programmgesteuerten Einheit, d.h. insbesondere das OCDS-Modul können vom Rücksetzen der programmgesteuerten Einheit ja völlig unbeeinflußt bleiben.

Es erweist sich sogar als vorteilhaft, wenn der Debugger selbst nach der wunschgemäßen Konfigurierung des OCDS-Moduls durch ihn ein ohne Rücksetzen des OCDS-Moduls erfolgendes Rücksetzen der programmgesteuerten Einheit veranlaßt. Dann kann das Verhalten der programmgesteuerten Einheit von einem definierten Ausgangszustand an uneingeschränkt und lückenlos verfolgt und beeinflußt werden.

Dies war bisher nicht möglich, weil das zusammen mit dem Rücksetzen der programmgesteuerten Einheit erfolgende Rücksetzen des OCDS-Moduls zur Folge hat, daß das OCDS-Modul durch einen gegebenenfalls angeschlossenen Debugger erst wieder konfiguriert werden muß, bevor es wunschgemäß genutzt werden kann; dies dauert verständlicherweise mehr oder weniger lange und hat zur Folge, daß die programmgesteuerte Einheit entsprechend lange nicht oder allenfalls eingeschränkt debuggbar ist.

Bei den vorstehenden Ausführungen ging es jeweils um eine Überprüfung oder Festlegung, ob mit dem Rücksetzen der programmgesteuerten Einheit 1 auch ein Rücksetzen des OCDS-Moduls 11 erfolgen soll oder nicht. Zugleich kann von der Rücksetz-Managementeinrichtung 13 natürlich überprüft und festgelegt werden, ob auch andere mit dem Debuggen in Zusammenhang stehende Komponenten der programmgesteuerten Einheit 1 nicht automatisch mit dem Rücksetzen der programmgesteuerten Einheit zurückgesetzt werden sollen. Zu diesen anderen Komponenten gehören insbesondere die Debug-Schnittstelle 12 und gegebenenfalls weitere Komponenten, deren Rücksetzen den Debug-Vorgang stören oder unterbrechen kann.

Alternativ oder zusätzlich können auch beliebige andere Komponenten der programmgesteuerten Einheit abhängig von den selben oder anderen Bedingungen wie beschrieben behandelt werden. D.h., daß bei Bedarf auch für andere Komponenten der programmgesteuerten Einheit durch die Rücksetz-Managementeinrichtung 13 oder andere Einrichtungen festgelegt werden kann, ob mit dem Rücksetzen der programmgesteuerten Einheit auch ein Rücksetzen der betreffenden Komponenten erfolgen soll.

Die beschriebene Vorrichtung und das beschriebene Verfahren ermöglichen es so auf verblüffend einfache Art und Weise, daß der Betrieb von an die programmgesteuerte Einheit angeschlossenen Einrichtungen vom einem Rücksetzen der programmgesteuerten Einheit gänzlich unbeeinflußt bleiben können.

## Patentansprüche

1. Programmgesteuerte Einheit (1) mit einem sogenannten On-Chip-Debug-Support-Modul, OCDS-Modul (11),
**gekennzeichnet durch**
eine Rücksetz-Managementeinrichtung (13), **durch** welche festlegbar ist, ob mit einem Rücksetzen der programmgesteuerten Einheit auch ein Rücksetzen des OCDS-Moduls erfolgen soll oder nicht.

2. Programmgesteuerte Einheit nach Anspruch 1,
**dadurch gekennzeichnet,**
**daß** die Rücksetz-Managementeinrichtung (13) das Rücksetzen des OCDS-Moduls (11) unterbindet, wenn und so lange an die programmgesteuerte Einheit (1) ein externer Debugger (2) angeschlossen ist.

3. Programmgesteuerte Einheit nach Anspruch 1 oder 2,
**dadurch gekennzeichnet,**
**daß** die Rücksetz-Managementeinrichtung (13) das Rücksetzen des OCDS-Moduls (11) unterbindet, wenn und so lange ein an die programmgesteuerte Einheit (1) angeschlossener externer Debugger (2) signalisiert, daß kein Rücksetzen des OCDS-Moduls erfolgen soll.

4. Programmgesteuerte Einheit nach einem der vorhergehenden Ansprüche,
**dadurch gekennzeichnet,**
**daß** der Umstand, daß mit dem Rücksetzen der programmgesteuerten Einheit (1) kein Rücksetzen des OCDS-Moduls (11) erfolgen soll, innerhalb der programmgesteuerten Einheit durch ein in dieser erzeugtes oder ein vom externen Debugger (2) erhaltenes OCDS-Rücksetz-Sperrsignal (RLOCK) signalisiert wird.

5. Programmgesteuerte Einheit nach Anspruch 4,
**dadurch gekennzeichnet,**
**daß** die Rücksetz-Managementeinrichtung (13) eine Logikschaltung umfaßt, durch welche ein das Rücksetzen der programmgesteuerten Einheit (1) veranlassendes Signal (RPE) mit dem OCDS-Rücksetz-Sperrsignal (RLOCK) logisch verknüpft wird, und daß das aus der Verknüpfung resultierende Ausgangssignal als ein das Rücksetzen oder Nicht-Rücksetzen des OCDS-Moduls bewirkendes OCDS-Rücksetzsignal (ROCDS) verwendet wird.

6. Verfahren zum Debuggen einer mit einem sogenannten On-Chip-Debug-Support Modul OCDS-Modul (11) ausgestatteten programmgesteuerten Einheit (1) mittels eines externen Debuggers (2),
**dadurch gekennzeichnet,**
**daß** durch den externen Debugger bei Bedarf nach einem Rücksetzen der programmgesteuerten Einheit ein ohne Rücksetzen des OCDS-Moduls erfolgendes Rücksetzen der programmgesteuerten Einheit veranlaßt wird.

## Claims

1. A programmable unit (1) having a so-called on-chip debug support module, OCDS module (11),
distinguished by
a reset management device (13) by means of which it is possible to determine whether resetting of the programmable unit is or is not intended to also result in resetting of the OCDS module.

2. The programmable unit as claimed in claim 1,
wherein
the reset management device (13) prevents the resetting of the OCDS module (11) when and for as long as an external debugger (2) is connected to the programmable unit (1).

3. The programmable unit as claimed in claim 1 or 2,
wherein
the reset management device (13) prevents the resetting of the OCDS module (11) when and for as long as an external debugger (2) which is connected to the programmable unit (1) signals that the OCDS module should not be reset.

4. The programmable unit as claimed in one of the preceding claims,
wherein
the situation where the resetting of the programmable unit (1) is not intended to result in resetting of the OCDS module (11) is signaled within the programmable unit by means of an OCDS reset inhibit signal (RLOCK) which is produced in the programmable unit, or by an OCDS reset inhibit signal (RLOCK) which is obtained from the external debugger (2).

5. The programmable unit as claimed in claim 4,
wherein
the reset management device (13) has a logic circuit by means of which a signal (RPE) which initiates the resetting of the programmable unit (1) is logically linked to the OCDS reset inhibit signal (RLOCK), and wherein the output signal which results from the linking process is used as an OCDS reset signal (ROCDS) which results in the OCDS module being reset or not being reset.

6. A method for debugging a programmable unit (1), which is equipped with a so-called on-chip debug support module, OCDS module (11), by means of an external debugger (2), wherein, if required after resetting of the programmable unit, the external debugger initiates the resetting of the programmable unit without resetting of the OCDS module.

## Revendications

1. Unité programmable (1) munie d'un module dit « On-Chip-Debug-Support » (module embarqué d'assistance au débogage), module OCDS (11), **caractérisée par** un dispositif de gestion de la réinitialisation (13) qui permet de déterminer si une réinitialisation de l'unité programmable doit être accompagnée ou non d'une réinitialisation du module OCDS.

2. Unité programmable selon la revendication 1, **caractérisée en ce que** le dispositif de gestion de la réinitialisation (13) empêche la réinitialisation du module OCDS (11) si et tant qu'un débogueur externe (2) est raccordé à l'unité programmable (1).

3. Unité programmable selon la revendication 1 ou 2, **caractérisée en ce que** le dispositif de gestion de la réinitialisation (13) empêche la réinitialisation du module OCDS (11) si et tant qu'un débogueur externe (2) raccordé à l'unité programmable (1) signale qu'aucune réinitialisation du module OCDS ne doit avoir lieu.

4. Unité programmable selon l'une des revendications précédentes, **caractérisée en ce que** l'état selon lequel la réinitialisation de l'unité programmable (1) ne doit pas être accompagnée d'une réinitialisation du module OCDS (11) est signalé à l'intérieur de l'unité programmable par un signal de blocage de la réinitialisation OCDS (RLOCK) généré à l'intérieur de celle-ci ou par le débogueur externe (2).

5. Unité programmable selon la revendication 4, **caractérisée en ce que** le dispositif de gestion de la réinitialisation (13) comprend un circuit logique par le biais duquel un signal (RPE) qui commande la réinitialisation de l'unité programmable (1) est combiné logiquement avec le signal de blocage de la réinitialisation OCDS (RLOCK) et que le signal de sortie qui résulte de la combinaison est un signal de réinitialisation OCDS (ROCDS) qui commande la réinitialisation ou la non-réinitialisation du module OCDS.

6. Procédé pour déboguer une unité programmable (1) équipée d'un module dit « On-Chip-Debug-Support » (module embarqué d'assistance au débogage), module OCDS (11), au moyen d'un débogueur externe (2), **caractérisé en ce qu'**une réinitialisation de l'unité programmable sans réinitialisation du module OCDS est commandée en cas de besoin par le débogueur externe après une réinitialisation de l'unité programmable.
